(19) Europäisches Patentamt
European Patent Office
Office européen des brevets

(11) **EP 4 567 920 A1**

(12) **EUROPEAN PATENT APPLICATION**
published in accordance with Art. 153(4) EPC

(43) Date of publication:
**11.06.2025 Bulletin 2025/24**

(51) International Patent Classification (IPC):
*H01M 4/36* (2006.01)    *H01M 4/38* (2006.01)
*H01M 4/62* (2006.01)

(21) Application number: **22884776.0**

(52) Cooperative Patent Classification (CPC):
**Y02E 60/10**

(22) Date of filing: **22.11.2022**

(86) International application number:
**PCT/CN2022/133358**

(87) International publication number:
**WO 2024/031867 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.08.2022  CN 202210953961**

(71) Applicants:
• **Shinghwa Amperex Technology (Dongying) Co.,
Ltd.**
**Dongying, Shandong 257503 (CN)**
• **Shinghwa Advanced Material Technology
(Meishan)
Co., Ltd.**
**Meishan, Sichuan 620010 (CN)**

• **Shida Shingwa Advanced Material Group Co.,
Ltd.**
**Dongying, Shandong 257503 (CN)**

(72) Inventors:
• **DING, Weitao**
**Dongying, Shandong 257503 (CN)**
• **XING, Xianbo**
**Dongying, Shandong 257503 (CN)**
• **LIU, Denghua**
**Dongying, Shandong 257503 (CN)**
• **CHEN, Yingnan**
**Dongying, Shandong 257503 (CN)**

(74) Representative: **Meyer-Dulheuer MD Legal
Patentanwälte PartG mbB
Hanauer Landstr. 287-289
60314 Frankfurt am Main (DE)**

(54) **NITROGEN-DOPED GRAPHENE-COATED SILICON-CARBON COMPOSITE MATERIAL, AND
PREPARATION METHOD THEREFOR AND USE THEREOF**

(57)    The present invention discloses a nitrogen-doped graphene coated silicon-carbon composite material and a preparation method and application thereof. The nitrogen-doped graphene coated silicon-carbon composite material includes at least a silicon-based matrix as an inner core and a coating layer as a shell, where the coating layer includes nitrogen-doped amorphous carbon and graphene, and the graphene coats an outer surface of the nitrogen-doped amorphous carbon and/or is doped in the nitrogen-doped amorphous carbon. The present invention can significantly improve liquid retention performance, reduce expansion of silicon during charging and discharging and impedance, and improve cycling and power performance of a battery in which the nitrogen-doped graphene coated silicon-carbon composite material is applied.

FIG. 1

EP 4 567 920 A1

**Description**

The present application claims priority to Chinese Patent Application No. 2022109539619, filed with the China National Intellectual Property Administration on August 10, 2022 and entitled "NITROGEN-DOPED GRAPHENE COATED SILICON-CARBON COMPOSITE MATERIAL AND PREPARATION METHOD AND APPLICATION THEREOF", which is incorporated herein by reference in its entirety.

**TECHNICAL FIELD**

The present invention relates to the field of lithium-ion battery preparation, and in particular, to a nitrogen-doped graphene coated silicon-carbon composite material, and the present invention further relates to preparation and application of the nitrogen-doped graphene coated silicon-carbon composite material.

**BACKGROUND**

With the emergence of emerging markets such as electric vehicles (EV) and hybrid electric vehicles (HEV), there is a huge demand for lithium-ion batteries (LIB). Currently, a commercial negative electrode material of a lithium-ion battery is mainly graphite carbon material, with a theoretical maximum specific capacity of only 372 mAh/g, which restricts the further improvement of lithium battery capacity.

Because of a high theoretical capacity (for example, a theoretical capacity of Li4.4Si alloy is about 4200 mAh/g) and abundant resources, silicon is the most promising electrode material in the new generation. A lithiation platform voltage of a silicon-based electrode is greater than a platform voltage of a graphite electrode, which can effectively avoid the formation of lithium dendrites, thereby improving safety of lithium-ion batteries. However, during lithium intercalation and deintercalation, the volume of the silicon-based electrode expands (by about 300%), which leads to destruction of the structure of the silicon-based electrode and peeling, pulverization and conductivity decline of the electrode, and thus the capacity of the lithium-ion battery rapidly declines. In addition, rate performance of silicon is relatively poor due to a poor electronic conductivity of the silicon.

Based on the foregoing situation, the applicant has decided to seek technical solutions to solve the foregoing technical problems based on the inventor's years of dedicated research experience in the fields of silicon-based materials and lithium-ion batteries.

**SUMMARY**

In view of this, an objective of the present invention is to provide a nitrogen-doped graphene coated silicon-carbon composite material and a preparation method and application thereof. The nitrogen-doped graphene coated silicon-carbon composite material can significantly improve liquid retention performance, reduce expansion of silicon during charging and discharging and impedance, and improve cycling and power performance of a battery in which the nitrogen-doped graphene coated silicon-carbon composite material is applied.

The technical solution of the present invention is as follows:

A nitrogen-doped graphene coated silicon-carbon composite material includes: at least a silicon-based matrix as an inner core and a coating layer as a shell, where the coating layer includes nitrogen-doped amorphous carbon and graphene, and the graphene coats an outer surface of the nitrogen-doped amorphous carbon and/or is doped in the nitrogen-doped amorphous carbon.

Preferably, a mass ratio of the silicon-based matrix to the coating layer is 100:(1-8); and/or a mass ratio of the nitrogen-doped amorphous carbon to the graphene in the coating layer is 10:(0.5-4).

Preferably, the silicon-based matrix includes nano-silicon, and the nitrogen-doped amorphous carbon includes nitrogen-doped porous carbon with a porous network structure.

Preferably, a preparation method for the nitrogen-doped graphene coated silicon-carbon composite material described above is provided, where a silicon-based precursor is obtained by electrochemical polymerization (i.e., an electrochemical deposition method) of a carbon source and a nitrogen source coupling agent with a carboxylated silicon-based matrix, and the silicon-based precursor and a graphene oxide dispersion are subjected to hydrothermal reaction, hydrogen reduction reaction and carbonization treatment to obtain the nitrogen-doped graphene coated silicon-carbon composite material.

Preferably, the method includes the following operation steps:

S10): uniformly mixing the carboxylated silicon-based matrix with a binder, and pressing and molding the mixture to obtain a rod-like silicon-based composite;

S20): performing electrochemical polymerization of the carbon source and the nitrogen source coupling agent that are dissolved in a solvent as an electrolyte and the rod-like silicon-based composite as a working electrode to obtain the silicon-based precursor;

S30): placing the silicon-based precursor in the graphene oxide dispersion, uniformly dispersing, performing hydrothermal reaction under conditions of heating and pressurizing, and then drying and crushing; and

S40): performing hydrogen reduction reaction of the composite material obtained in step S30) and hydrogen, and then performing carbonization treatment to obtain the nitrogen-doped graphene coated silicon-carbon composite material.

Preferably, the silicon-based matrix includes nano-silicon, and the nano-silicon is carboxylated by an acid solution; the carbon source includes polystyrene, and the nitrogen source coupling agent includes an aminosilane coupling agent.

Preferably, the electrochemical polymerization includes: scanning for 10-100 cycles at a scanning rate of 0.5-5 mV/s at a voltage in the range of -2 V to 2 V with saturated calomel as a reference electrode, and washing and filtering the working electrode subjected to the electrochemical polymerization, to obtain a nitrogen-doped silicon/polystyrene microsphere composite material as the silicon-based precursor.

Preferably, the proportion of the graphene oxide in the graphene oxide dispersion is 0.5-8wt% in part by weight; the hydrothermal reaction includes: performing hydrothermal reaction for at least 1 hour at a temperature in the range of 100-200°C and a pressure in the range of 1-5 Mpa; the hydrogen reduction reaction includes: introducing hydrogen and an inert gas in a volume ratio of (1-5):10 in a vacuum state, and performing hydrogen reduction reaction for at least 1 hour at a temperature in the range of 250-350°C; and the carbonization treatment includes: carbonizing for at least 1 hour at a temperature in the range of 700-1100°C.

Preferably, a mass ratio of the silicon-based precursor to the graphene oxide is 100:(1-8); and the binder includes asphalt and/or polyvinyl alcohol and/or a CMC binder and/or an LA133 binder and/or a styrene butadiene rubber (SBR) latex binder and/or an LA136D binder.

Preferably, application of the nitrogen-doped graphene coated silicon-carbon composite material described above is provided, where the nitrogen-doped graphene coated silicon-carbon composite material is used as an active substance raw material for preparing a battery electrode plate.

It should be noted that nano-Si referred to in the present application refers to crystalline silicon particles with a diameter less than 20 nanometers, which can be directly purchased from the market. It should also be noted that the rod-like silicon-based composite referred to in the present application may be rod-like, sheet-like or in another shape that can be used for the working electrode in electrochemical deposition, and changes of these shapes all fall within the scope of the rod-like silicon-based composite in the present application.

The coating layer in the nitrogen-doped graphene coated silicon-carbon composite material according to the present application includes the nitrogen-doped amorphous carbon and the graphene, where the graphene coats the outer surface of the nitrogen-doped amorphous carbon and/or is doped in the nitrogen-doped amorphous carbon, which can significantly improve liquid retention performance and reduce expansion of silicon during charging and discharging; in addition, the amorphous carbon in the nitrogen-doped graphene coated silicon-carbon composite material contains nitrogen atoms, which can reduce the impedance, and excellent isotropic performance of carbon can improve power performance of a battery in which the nitrogen-doped graphene coated silicon-carbon composite material is applied; and in addition, the graphene in the nitrogen-doped graphene coated silicon-carbon composite material coats the outer surface of the amorphous carbon and/or is doped in the amorphous carbon, which can further reduce the impedance and thus improve cycling and power performance of a battery in which the nitrogen-doped graphene coated silicon-carbon composite material is applied.

According to the present application, during preparation, it is proposed to first establish chemical bond connection on the surface of the silicon-based matrix by using the electrochemical deposition method by chemical bonds, the porous network structure with a nitrogen source and the carbon source composited is deposited on the surface of the working electrode made based on the silicon-based matrix, carbonization is performed after the graphene is composited, and the formed porous carbon structure can significantly reduce the expansion of the silicon and the impedance. In addition, the preparation process is stable, reliable and efficient, and is suitable for serving as a preparation route for mass production of nitrogen-doped graphene coated silicon-carbon composite materials.

## BRIEF DESCRIPTION OF DRAWINGS

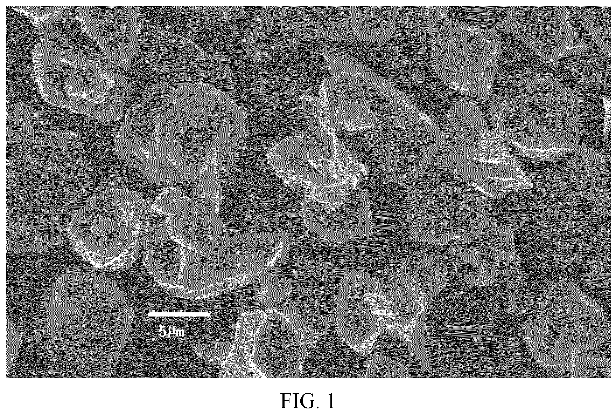

FIG. 1 is an SEM image of a nitrogen-doped graphene coated silicon-carbon composite material in Embodiment 1 of the present invention.

## DESCRIPTION OF EMBODIMENTS

This embodiment discloses a nitrogen-doped graphene coated silicon-carbon composite material, including at least a silicon-based matrix as an inner core and a coating layer as a shell, where the coating layer includes nitrogen-doped amorphous carbon and graphene, and the graphene coats an outer surface of the nitrogen-doped amorphous carbon and/or is doped in the nitrogen-doped amorphous carbon. Preferably, in this implementation, a mass ratio of the silicon-based matrix to the coating layer is 100:(1-8), more preferably 100:(1-6), and further preferably 100:(1-5); and/or a mass ratio of the nitrogen-doped amorphous carbon to the graphene in the coating layer is 10:(0.5-4), more preferably 10:(0.5-3), and further preferably 10:(0.5-2).

Preferably, in this implementation, the silicon-based matrix includes nano-silicon, and the nitrogen-doped amorphous carbon includes nitrogen-doped porous carbon with a porous network structure, which can significantly reduce the expansion of the silicon and the impedance.

To efficiently, reliably and stably obtain the nitrogen-doped graphene coated silicon-carbon composite material described above in this embodiment, preferably, a preparation method for the nitrogen-doped graphene coated silicon-carbon composite material described above is provided, where a silicon-based precursor is obtained by electrochemical polymerization of a carbon source and a nitrogen source coupling agent with a carboxylated silicon-based matrix, and the silicon-based precursor and a graphene oxide dispersion are subjected to hydrothermal reaction, hydrogen reduction reaction and carbonization treatment to obtain the nitrogen-doped graphene coated silicon-carbon composite material.

Further, preferably, in this implementation, the preparation method for the nitrogen-doped graphene coated silicon-carbon composite material includes the following operation steps.

S10): Uniformly mix carboxylated nano-silicon with a binder, and then press and mold the mixture (which may be placed in a hot press for implementation) to obtain a rod-like silicon-based composite. Preferably, in step S10), a silicon-based matrix includes nano-silicon, and the nano-silicon is carboxylated by an acid solution to obtain carboxylated nano-silicon. Specifically, preferably, the nano-silicon is placed into a mixed solution of concentrated sulfuric acid/concentrated nitric acid, soaked for 1-24 hours at 25-80°C, and then washed with deionized water to obtain the carboxylated nano-silicon in step S10). Preferably, in step S10), the binder includes asphalt and/or polyvinyl alcohol and/or a CMC binder and/or an LA133 binder and/or an SBR latex binder and/or an LA136D binder, or another suitable known binder may be used. Specifically, preferably, a mass ratio of the carboxylated nano-silicon to the binder is (80-90):(10-20).

S20): Perform electrochemical polymerization of a carbon source and a nitrogen source coupling agent that are dissolved in a solvent as an electrolyte and the rod-like silicon-based composite as a working electrode to obtain the silicon-based precursor. Preferably, in step S20), the carbon source includes polystyrene, the nitrogen source coupling agent includes an aminosilane coupling agent, and the solvent is chloroform, and specifically, preferably, a mass ratio of the polystyrene to the aminosilane coupling agent to the chloroform is (1-5):(1-5):100. In another implementation, another known substance with similar effects may also be used as a carbon source or a nitrogen source coupling agent, which is not uniquely limited in this embodiment. Preferably, in step S20), the electrochemical polymerization includes: scanning for 10-100 cycles at a scanning rate of 0.5-5 mV/s at a voltage in the range of -2 V to 2 V with saturated calomel as a reference electrode, and washing and filtering the working electrode subjected to the electrochemical polymerization, to obtain a nitrogen-doped silicon/polystyrene microsphere composite material as the silicon-based precursor.

S30): Place the silicon-based precursor in a graphene oxide dispersion, uniformly disperse, perform hydrothermal reaction under conditions of heating and pressurizing, and then dry and crush. Preferably, in step S30), a mass ratio of the silicon-based precursor to the graphene oxide is 100:(1-8), more preferably 100:(1-5); preferably, the proportion of the graphene oxide in the graphene oxide dispersion is 0.5-8wt% in part by weight, more preferably 0.5-6wt%, and further more preferably 0.5-5wt%. Preferably, the hydrothermal reaction includes: performing hydrothermal reaction for at least 1 hour at a temperature in the range of 100-200°C and a pressure in the range of 1-5 Mpa, more preferably 1-8 hours, and further preferably 1-6 hours.

S40): Perform hydrogen reduction reaction of the composite material obtained in step S30) and hydrogen, and then perform carbonization treatment to obtain the nitrogen-doped graphene coated silicon-carbon composite material. Preferably, in step S40), the hydrogen reduction reaction includes: introducing hydrogen and an inert gas (i.e., mixed gas) in a volume ratio of (1-5):10 in a vacuum state, and performing hydrogen reduction reaction for at least 1 hour at a temperature in the range of 250-350°C, more preferably 1-8 hours, and further preferably 1-6 hours. The carbonization treatment includes: carbonizing for at least 1 hour at a temperature in the range of 700-1100°C, more preferably 1-8 hours, and further preferably 1-6 hours.

It should be noted in particular that according to the present application, parameters in various preferred ranges are enumerated by using the above embodiment through a large number of experiments. A person skilled in the art may select from these preferred parameter ranges (including endpoint values and intermediate values) according to an actual situation. To reduce the length of this specification, this embodiment will not be expanded one by one.

Preferably, this embodiment further provides application of the nitrogen-doped graphene coated silicon-carbon composite material described above, where the nitrogen-doped graphene coated silicon-carbon composite material is used as an active substance raw material for preparing a battery electrode plate. The silicon-carbon composite material is used as the active substance raw material for preparing a battery electrode plate, and may be specifically used as a battery negative plate, which may be selected according to actual requirements. During specific implementation, a process for preparing the battery negative plate may be any known process, which is not the innovative content of the present application, and is not limited in the present application. It should also be noted that when the present application is applied, a battery may be a button battery, a pouch battery or another known battery, and a person skilled in the art may apply the battery according to actual needs, which is not specially restricted in the present application.

To enable a person skilled in the art to better understand the technical solutions in the present invention, the technical solutions in the embodiments of the present invention are clearly and completely described below with reference to the accompanying drawings in the embodiments of the present invention. Obviously, the described embodiments are merely some, rather than all, of the embodiments of the present invention. All other embodiments obtained by a person of ordinary skill in the art based on the embodiments of the present invention without creative efforts shall fall within the protection scope of the present invention.

**Embodiment 1** Operations are performed according to the following steps.

Step 1: Place nano-silicon into a mixed solution of concentrated sulfuric acid/concentrated nitric acid, soak at 50°C for 12 hours, and then wash with deionized water to obtain carboxylated nano-silicon.

Step 2: Uniformly mix 85 g of carboxylated nano-silicon and 15 g of asphalt binder, place the mixture in a hot press, and press the mixture at 100°C to obtain a rod-like silicon-based composite.

Step 3: Perform electrochemical polymerization by using an electrochemical deposition method (cyclic voltammetry), specifically including: scanning for 50 cycles at a scanning rate of 1 mV/s at a voltage in the range of -2 V to 2 V with the rod-like silicon-based composite as a working electrode and saturated calomel as a reference electrode, and washing, with deionized water, the working electrode subjected to electrochemical polymerization and filtering to obtain a nitrogen-doped silicon/polystyrene microsphere composite material as a silicon-based precursor, where an electrolyte in electrochemical polymerization is a solution (with a mass concentration of 6%) prepared by dissolving 3 g of polystyrene and 3 g of aminosilane coupling agent in 100 mL of chloroform solvent.

Step 4: Add 100 g of nitrogen-doped silicon/polystyrene microsphere composite material into 300 mL of graphene oxide dispersion with a mass concentration of 1wt%, uniformly disperse, then transfer to a high-pressure reaction kettle, react for 3 hours at 150°C and a pressure of 3 Mpa, and perform vacuum drying and crush.

Step 5: Then transfer to a tubular carbonization furnace, first introduce argon as an inert gas to remove the air in a tube, then introduce a hydrogen mixed gas (a volume ratio of hydrogen to argon in the mixed gas is 3: 10), and perform hydrogen reduction reaction for 3 hours at 300°C.

Step 6: Then heat to 950°C and perform carbonization treatment for 3 hours to obtain the nitrogen-doped graphene coated silicon-carbon composite material of Embodiment 1.

According to the present application, SEM (i.e., scanning electron microscope) testing was performed on the nitrogen-doped graphene coated silicon-carbon composite material obtained in Embodiment 1. Test results are shown in FIG. 1. From FIG. 1, it can be learned that the silicon-carbon composite material obtained in Embodiment 1 had a particle size of 5-10 $\mu$m, and a small amount of graphene with a sheet-like structure was doped in the silicon-carbon composite material.

**Embodiment 2** Operations are performed according to the following steps.

Step 1: Place nano-silicon into a mixed solution of concentrated sulfuric acid/concentrated nitric acid, soak at 25°C for 24 hours, and then wash with deionized water to obtain carboxylated nano-silicon.

Step 2: Uniformly mix 80 g of carboxylated nano-silicon and 29 g of polyvinyl alcohol binder, place the mixture in a hot press, and press the mixture at 100°C to obtain a rod-like silicon-based composite.

Step 3: Perform electrochemical polymerization by using an electrochemical deposition method (cyclic voltammetry), specifically including: scanning for 10 cycles at a scanning rate of 0.5 mV/s at a voltage in the range of -2 V to 2 V with the rod-like silicon-based composite as a working electrode and saturated calomel as a reference electrode, and washing, with deionized water, the working electrode subjected to electrochemical polymerization and filtering to obtain a nitrogen-doped silicon/polystyrene microsphere composite material as a silicon-based precursor, where an electrolyte in electrochemical polymerization is a mixed solution prepared by dissolving 1 g of polystyrene and 1 g of aminosilane coupling agent in 100 mL of chloroform solvent.

Step 4: Add 100 g of nitrogen-doped silicon/polystyrene microsphere composite material into 20 mL of graphene oxide dispersion with a mass concentration of 0.5wt%, uniformly disperse, then transfer to a high-pressure reaction kettle, react for 6 hours at 100°C and a pressure of 5 Mpa, and perform vacuum drying and crush.

Step 5: Then transfer to a tubular carbonization furnace, first introduce argon as an inert gas to remove the air in a tube, then introduce a hydrogen mixed gas (a volume ratio of hydrogen to argon in the mixed gas is 1: 10), and perform hydrogen reduction reaction for 6 hours at 250°C.

Step 6: Then heat to 700°C and perform carbonization treatment for 6 hours to obtain the nitrogen-doped graphene coated silicon-carbon composite material of Embodiment 2.

**Embodiment 3** Operations are performed according to the following steps.

Step 1: Place nano-silicon into a mixed solution of concentrated sulfuric acid/concentrated nitric acid, soak at 80°C for 1 hour, and then wash with deionized water to obtain carboxylated nano-silicon.

Step 2: Uniformly mix 90 g of carboxylated nano-silicon and 10 g of CMC binder, place the mixture in a hot press, and press the mixture at 100°C to obtain a rod-like silicon-based composite.

Step 3: Perform electrochemical polymerization by using an electrochemical deposition method (cyclic voltammetry), specifically including: scanning for 100 cycles at a scanning rate of 5 mV/s at a voltage in the range of -2 V to 2 V with the rod-like silicon-based composite as a working electrode and saturated calomel as a reference electrode, and washing, with deionized water, the working electrode subjected to electrochemical polymerization and filtering to obtain a nitrogen-doped silicon/polystyrene microsphere composite material as a silicon-based precursor, where an electrolyte in electrochemical polymerization is a mixed solution prepared by dissolving 5 g of polystyrene and 5 g of aminosilane coupling agent in 100 mL of chloroform solvent.

Step 4: Add 100 g of nitrogen-doped silicon/polystyrene microsphere composite material into 100 mL of graphene oxide dispersion with a mass concentration of 5wt%, uniformly disperse, then transfer to a high-pressure reaction kettle, react for 1 hour at 200°C and a pressure of 1 Mpa, and perform vacuum drying and crush.

Step 5: Then transfer to a tubular carbonization furnace, first introduce argon as an inert gas to remove the air in a tube, then introduce a hydrogen mixed gas (a volume ratio of hydrogen to argon in the mixed gas is 5: 10), and perform hydrogen reduction reaction for 1 hour at 350°C.

Step 1: Then heat to 1100°C and perform carbonization treatment for 1 hour to obtain the nitrogen-doped graphene coated silicon-carbon composite material of Embodiment 3.

To verify the technical effects obtained by the embodiments of the present application, in the present application, the following comparative examples are further specially set.

Comparative example 1: The technical solution of comparative example 1 is the same as that of Embodiment 1 except that in comparative example 1, 100 g of carboxylated nano-silicon in Embodiment 1 (obtained through step 1 of Embodiment 1), 5 g of polystyrene and 5 g of aminosilane coupling agent are dissolved in 100 mL of chloroform solvent and dispersed uniformly, and then spray-dried to obtain a silicon-based precursor, which is used to replace the nitrogen-doped silicon/polystyrene microsphere composite material in Embodiment 1 to obtain a silicon-carbon composite material in comparative example 1.

Comparative example 2: The technical solution of comparative example 2 is the same as that of Embodiment 1 except that step 4 in Embodiment 1 is canceled, 100 g of nitrogen-doped silicon/polystyrene microsphere composite material obtained in step 3 in Embodiment 1 is directly transferred into a tubular carbonization furnace, and steps 5 and 6 are performed according to Embodiment 1 to obtain a silicon-carbon composite material in comparative example 2.

To compare and verify the effects of the above embodiments and comparative examples, according to the present application, physical and chemical properties (powder conductivity, tap density, specific surface area, and particle size) of the silicon-carbon composite materials obtained in Embodiments 1-3 and the silicon-carbon composite materials obtained in comparative examples 1-2 were tested according to the method in the national standard GBT-245332019 Graphite negative electrode materials for lithium ion battery, and the test results are shown in Table 1.

**Table 1 Comparison of physical and chemical properties between Embodiments 1-3 and comparative example 1-2**

| Group | Tap density (g/cm$^3$) | Power conductivity (S/cm) | Specific surface area (m$^2$/g) | Particle size (D50, μm) |
|---|---|---|---|---|
| Embodiment 1 | 1.08 | 11.5 | 3.9 | 6.5 |
| Embodiment 2 | 1.06 | 10.3 | 3.7 | 6.7 |
| Embodiment 3 | 1.05 | 9.4 | 3.6 | 7.1 |
| Comparative example 1 | 0.87 | 5.5 | 2.6 | 8.8 |
| Comparative example 2 | 0.90 | 3.8 | 2.1 | 8.4 |

By referring to Table 1, it can be known that the powder conductivity of the silicon-carbon composite materials in Embodiments 1-3 of the present invention is obviously improved compared with that in comparative examples 1-2. This is because in the embodiments of the present application, polystyrene and an amino coupling agent thereof are deposited on the surface of nano-silicon by using the electrochemical deposition method, and amorphous carbon is formed after coating with graphene and carbonization treatment, and features high density, stable and reliable structure, etc., thereby reducing the impedance and increasing the tap density of the silicon-carbon composite material, and the amino coupling agent can form a network structure to further increase the tap density of the silicon-carbon composite material.

To further compare and verify the effects of the above embodiments and comparative examples, according to the present application, the silicon-carbon composite materials obtained in Embodiments 1-3 and the silicon-carbon composite materials in comparative examples 1-2 were respectively used as active substance raw materials of negative plates of lithium-ion batteries, and five button batteries were assembled by using the following method, including:

adding 9 g of active substance (i.e., the silicon-carbon composite material of the corresponding embodiment or comparative example), 0.5 g of conductive agent SP and 0.5 g of LA133 binder into 220 mL of deionized water and uniformly stirring to obtain slurry; and coating a copper foil current collector with the slurry to obtain an electrode plate; and

assembling a button battery in a glove box with the oxygen and water contents both less than 0.1 ppm by using a correspondingly made electrode plate as a negative electrode, a metal lithium sheet as a counter electrode, an electrolyte and a separator. According to the sequence of Embodiment 1, Embodiment 2, Embodiment 3, comparative example 1 and comparative example 2, correspondingly prepared button batteries were marked as A-1, B-1, C-1, D-1, and E-1. Celgard 2400 was selected as the separator, $LiPF_6$ solution was selected as the electrolyte, $LiPF_6$ had a concentration of 1.2 mol/L, and a solvent was a mixed solution of ethylene carbonate (EC) and diethyl carbonate (DEC) (in a weight ratio of 1:1).

Then performance of the button batteries was tested by a using a LAND tester. The test conditions used were as follows: Charging and discharging were performed at a rate of 0.1C, with a voltage range of 0.005-2 V, and the charging and discharging were stopped after three cycles. Then, the full-charge expansion of the negative plate was tested. The test results are shown in Table 2.

**Table 2 Performance test comparison results of button batteries**

| Button battery | Initial discharge capacity (mAh/g) | Initial efficiency | Full-charge expansion |
|---|---|---|---|
| A-1 | 2080 | 89.9% | 88.5% |
| B-1 | 2040 | 89.3% | 89.4% |
| C-1 | 1920 | 89.1% | 90.9% |
| D-1 | 1720 | 85.5% | 112.4% |
| E-1 | 1710 | 84.9% | 115.5% |

It can be learned from Table 2 that compared with those in comparative example 1-2, the initial discharge capacity and initial efficiency of button batteries made of silicon-carbon composite materials provided in Embodiments 1-3 of the present invention were obviously improved, and the full-charge expansion of the batteries was obviously reduced.

To further compare and verify the effects of the above embodiments and comparative examples, according to the present application, the silicon-carbon composite materials obtained in Embodiments 1-3 and comparative examples 1-2 were used as active substance raw materials of a negative electrode material of lithium-ion batteries, and five pouch batteries with a specification of 5 Ah were assembled by using the following method, including:

doping 90wt% (the weight percentage in a negative plate) of artificial graphite as a negative electrode material in a corresponding silicon-carbon composite material to manufacture a negative plate, and obtaining a 5 Ah pouch battery with a ternary material ($Li(Ni_{0.6}Co_{0.2}Mn_{0.2})O_2$) as a positive electrode material, a Celgard 2400 membrane as a separator, $LiPF_6$ as an electrolyte, a mixture of ethylene carbonate (EC) and diethyl carbonate (DEC) in a volume ratio of 1:1 as a solvent and a $LiPF_6$ concentration of 1.3 mol/L. According to the sequence of Embodiment 1, Embodiment 2, Embodiment 3, comparative example 1 and comparative example 2, correspondingly prepared pouch batteries were correspondingly marked as A-2, B-2, C-2, D-2, and E-2, respectively.

According to the present application, the following performance testing was performed on the pouch batteries correspondingly manufactured in Embodiments 1-3 and comparative example 1-2.

(1) After each pouch battery with a constant volume was dissected, a thickness D1 of a negative plate of the pouch battery was tested, then each pouch battery underwent 100 cycles (cycle test condition: 1C/1C@25+3°C@2.5-4.2 V), then the pouch battery was fully charged and then dissected again, a thickness D2 of the negative plate after the cycles was tested,

$$(\frac{D2-D1}{D1}) \times 100\%$$

and then an expansion rate (the expansion rate was ) was calculated. The test results are shown in Table 3 below.

**Table 3 Test results of expansion rates of negative plates of pouch batteries**

| Pouch battery | D1 ($\mu$m) | D2 ($\mu$m) | Expansion rate |
|---|---|---|---|
| A-2 | 112 | 159.5 | 42.4% |

(continued)

| Pouch battery | D1 (μm) | D2 (μm) | Expansion rate |
|---|---|---|---|
| B-2 | 111 | 159.0 | 43.2% |
| C-2 | 112 | 161.5 | 44.20% |
| D-2 | 114 | 182.5 | 60.1% |
| E-2 | 112 | 183.6 | 63.9% |

It can be learned from Table 3 that the expansion rate of a negative plate of each pouch lithium-ion battery made of the silicon-carbon composite materials provided in Embodiments 1-3 of the present invention was obviously less than that of comparative example 1-2. Therefore, it can be confirmed that the silicon-carbon composite material provided by each embodiment of the present invention can effectively reduce the expansion of a battery in which the silicon-carbon composite material is applied during charging and discharging.

(2) Cycling performance test and rate testing was performed on each pouch battery. The test conditions were: a charging and discharging voltage range of 2.5-4.2 V, a temperature of $25 \pm 3.0°C$, and a charging and discharging rate of 1.0C/1.0C. Rate test: A constant current ratio of the material at 2C was tested. The test results are shown in Table 4.

**Table 4 Performance test results of pouch batteries**

| Pouch battery | Initial capacity retention rate (%) | Capacity retention rate (%) after 500 cycles | 2C constant current ratio |
|---|---|---|---|
| A-2 | 100 | 95.1 | 93.3% |
| B-2 | 100 | 94.8 | 92.8% |
| C-2 | 100 | 94.7 | 92.2% |
| D-2 | 100 | 92.3 | 90.9% |
| E-2 | 100 | 92.1 | 90.7% |

It can be learned from Table 4 that the cycling performance of each pouch lithium-ion battery made of the silicon-carbon composite materials provided by Embodiments 1-3 of the present invention was obviously superior to that of comparative example 1-2, which can further prove that the silicon-carbon composite material provided by embodiments of the present invention features low expansion, low impedance, etc., so that the silicon-carbon composite material has relatively low expansion during cycling, which reduces the problem of lithium-ion consumption caused by SEI, thereby improving the cycling performance. In addition, the silicon-carbon composite material according to the embodiments of the present invention has relatively low impedance, so that the rate performance of the lithium-ion battery is improved, that is, the lithium-ion battery has a relatively high constant current ratio.

It would be obvious to a person skilled in the art that the present invention is not limited to the details of the foregoing example embodiments, and the present invention can be implemented in other specific forms without departing from the spirit or essential features of the present invention. Therefore, the embodiments should be regarded in all respects as examples rather than as restrictive, and the scope of the present invention is defined by the appended claims rather than the foregoing descriptions. Therefore, all changes falling within the meanings and scope of equivalent elements of the claims are included in the present invention. Any reference numeral in the claims shall not be construed as limiting the claims.

In addition, it should be understood that, although this specification has been described with reference to implementations, not every implementation includes only one independent technical solution, and such description of this specification is by way of clarity only. A person skilled in the art should take this specification as a whole, and the technical solutions of the embodiments may be combined as appropriate to obtain other implementations that can be understood by a person skilled in the art.

**Claims**

1.   A nitrogen-doped graphene coated silicon-carbon composite material, comprising: at least a silicon-based matrix as an inner core and a coating layer as a shell, wherein the coating layer comprises nitrogen-doped amorphous carbon and graphene, and the graphene coats an outer surface of the nitrogen-doped amorphous carbon and/or is doped in the nitrogen-doped amorphous carbon.

2. The nitrogen-doped graphene coated silicon-carbon composite material according to claim 1, wherein a mass ratio of the silicon-based matrix to the coating layer is 100:(1-8); and/or a mass ratio of the nitrogen-doped amorphous carbon to the graphene in the coating layer is 10:(0.5-4).

3. The nitrogen-doped graphene coated silicon-carbon composite material according to claim 1 or 2, wherein the silicon-based matrix comprises nano-silicon, and the nitrogen-doped amorphous carbon comprises nitrogen-doped porous carbon with a porous network structure.

4. A preparation method for the nitrogen-doped graphene coated silicon-carbon composite material according to one of claims 1 to 3, wherein a silicon-based precursor is obtained by electrochemical polymerization of a carbon source and a nitrogen source coupling agent with a carboxylated silicon-based matrix, and the silicon-based precursor and a graphene oxide dispersion are subjected to hydrothermal reaction, hydrogen reduction reaction and carbonization treatment to obtain the nitrogen-doped graphene coated silicon-carbon composite material.

5. The preparation method according to claim 4, comprising the following operation steps:

S10): uniformly mixing the carboxylated silicon-based matrix with a binder, and pressing and molding the mixture to obtain a rod-like silicon-based composite;
S20): performing electrochemical polymerization of the carbon source and the nitrogen source coupling agent that are dissolved in a solvent as an electrolyte and the rod-like silicon-based composite as a working electrode to obtain the silicon-based precursor;
S30): placing the silicon-based precursor in the graphene oxide dispersion, uniformly dispersing, performing hydrothermal reaction under conditions of heating and pressurizing, and then drying and crushing; and
S40): performing hydrogen reduction reaction of the composite material obtained in step S30) and hydrogen, and then performing carbonization treatment to obtain the nitrogen-doped graphene coated silicon-carbon composite material.

6. The preparation method according to claim 4 or 5, wherein the silicon-based matrix comprises nano-silicon, and the nano-silicon is carboxylated by an acid solution; the carbon source comprises polystyrene, and the nitrogen source coupling agent comprises an aminosilane coupling agent.

7. The preparation method according to claim 5, wherein the electrochemical polymerization comprises: scanning for 10-100 cycles at a scanning rate of 0.5-5 mV/s at a voltage in the range of -2 V to 2 V with saturated calomel as a reference electrode, and washing and filtering the working electrode subjected to the electrochemical polymerization, to obtain a nitrogen-doped silicon/polystyrene microsphere composite material as the silicon-based precursor.

8. The preparation method according to claim 4 or 5, wherein the proportion of the graphene oxide in the graphene oxide dispersion is 0.5-8wt% in part by weight; the hydrothermal reaction comprises: performing hydrothermal reaction for at least 1 hour at a temperature in the range of 100-200°C and a pressure in the range of 1-5 Mpa; the hydrogen reduction reaction comprises: introducing hydrogen and an inert gas in a volume ratio of (1-5):10 in a vacuum state, and performing hydrogen reduction reaction for at least 1 hour at a temperature in the range of 250-350°C; and the carbonization treatment comprises: carbonizing for at least 1 hour at a temperature in the range of 700-1 100°C.

9. The preparation method according to claim 5 or 7, wherein a mass ratio of the silicon-based precursor to the graphene oxide is 100:(1-8); and the binder comprises asphalt and/or polyvinyl alcohol and/or a CMC binder and/or an LA133 binder and/or a styrene butadiene rubber (SBR) latex binder and/or an LA136D binder.

10. Application of the nitrogen-doped graphene coated silicon-carbon composite material according to one of claims 1 to 3, wherein the nitrogen-doped graphene coated silicon-carbon composite material is used as an active substance raw material for preparing a battery electrode plate.

FIG. 1

## INTERNATIONAL SEARCH REPORT

| International application No. |
| --- |
| **PCT/CN2022/133358** |

| A. | CLASSIFICATION OF SUBJECT MATTER |
| --- | --- |

H01M4/36(2006.01)i;H01M4/38(2006.01)i;H01M4/62(2006.01)i

According to International Patent Classification (IPC) or to both national classification and IPC

| B. | FIELDS SEARCHED |
| --- | --- |

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNABS; CNTXT; DWPI; VEN; ENTXT; CNKI: 负极, 硅, 碳, 石墨烯, 包覆, 核, 壳, negative electrode, silicon, carbon, graphene, coat, core, shell

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 115101741 A (SHENGHUA NEW ENERGY TECHNOLOGY (DONGYING) CO., LTD. et al.) 23 September 2022 (2022-09-23) description, paragraphs 5-83, and figure 1 | 1-10 |
| X | CN 110739445 A (CHANGSHA SHENGTIAN NEW MATERIALS CO., LTD.) 31 January 2020 (2020-01-31) description, paragraphs 7-40, and figure 1 | 1, 2, 10 |
| Y | CN 110739445 A (CHANGSHA SHENGTIAN NEW MATERIALS CO., LTD.) 31 January 2020 (2020-01-31) description, paragraphs 7-40, and figure 1 | 3-4, 6, 8 |
| Y | CN 104347857 A (HUAWEI TECHNOLOGIES CO., LTD.) 11 February 2015 (2015-02-11) description, paragraphs 4-70, and figures 1-2 | 3 |
| Y | CN 109428062 A (INNER MONGOLIA XINMENG CARBON NANOTECHNOLOGY CO., LTD.) 05 March 2019 (2019-03-05) description, paragraphs 3-13, and figure 1 | 4, 6, 8 |
| X | CN 104716321 A (TIANJIN UNIVERSITY) 17 June 2015 (2015-06-17) description, paragraphs 4-47, and figures 1-9 | 1, 2, 10 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 April 2023** | **26 April 2023** |

| Name and mailing address of the ISA/CN | Authorized officer |
| --- | --- |
| **China National Intellectual Property Administration (ISA/ CN) China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2022/133358**

### C. DOCUMENTS CONSIDERED TO BE RELEVANT

| Category* | Citation of document, with indication, where appropriate, of the relevant passages | Relevant to claim No. |
|---|---|---|
| A | KR 20200133134 A (KOREA INSTITUTE OF SCIENCE AND TECHNOLOGY) 26 November 2020 (2020-11-26)<br>entire document | 1-10 |

Form PCT/ISA/210 (second sheet) (July 2022)

## INTERNATIONAL SEARCH REPORT
### Information on patent family members

International application No.

**PCT/CN2022/133358**

| Patent document cited in search report | | | Publication date (day/month/year) | Patent family member(s) | | | Publication date (day/month/year) |
|---|---|---|---|---|---|---|---|
| CN | 115101741 | A | 23 September 2022 | None | | | |
| CN | 110739445 | A | 31 January 2020 | CN | 110739445 | B | 30 October 2020 |
| CN | 104347857 | A | 11 February 2015 | ES | 2733374 | T3 | 28 November 2019 |
| | | | | EP | 2876710 | A1 | 27 May 2015 |
| | | | | EP | 2876710 | B1 | 01 May 2019 |
| | | | | JP | 2016526262 | A | 01 September 2016 |
| | | | | JP | 6169260 | B2 | 26 July 2017 |
| | | | | US | 2015104697 | A1 | 16 April 2015 |
| | | | | US | 10454094 | B2 | 22 October 2019 |
| | | | | US | 2020028150 | A1 | 23 January 2020 |
| | | | | KR | 20150143767 | A | 23 December 2015 |
| | | | | WO | 2015014121 | A1 | 05 February 2015 |
| | | | | CN | 104347857 | B | 07 July 2017 |
| CN | 109428062 | A | 05 March 2019 | None | | | |
| CN | 104716321 | A | 17 June 2015 | CN | 104716321 | B | 07 August 2018 |
| KR | 20200133134 | A | 26 November 2020 | KR | 102250814 | B1 | 12 May 2021 |

Form PCT/ISA/210 (patent family annex) (July 2022)

**EP 4 567 920 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022109539619